# FASCICULE DE BREVET EUROPEEN

(11) **EP 1 093 747 B1**
(45) Date de publication et mention de la délivrance du brevet: **04.02.2004**
(21) Numéro de dépôt: 00402888.2
(22) Date de dépôt: 18.10.2000
(51) Int. Cl.: A47J 31/60, C02F 1/00

(54) **Cartouche amovible de traitement d'eau et machine à infusion comportant une telle cartouche**
Auswechselbare Wasserbehandlungskartusche und Infusionsgerät mit einer solchen Kartusche
Removable water treatment cartridge and beverage brewing machine containing such a cartridge

(30) Priorité: 19.10.1999 FR 9913118
(43) Date de publication de la demande: 25.04.2001
(73) Titulaire: SEB S.A., 69130 Ecully (FR)
(72) Inventeur: Mih, Séverine, 61250 Damigny (FR); Saltet, Philippe, 78117 Chateaufort (FR)
(74) Mandataire: Kiehl, Hubert

(56) Documents cités:
- WO-A-96/31440
- DE-A- 4 135 637
- DE-U- 9 306 849
- FR-A- 2 708 452
- US-A- 4 895 648
- US-A- 5 188 727
- US-A- 5 665 224

## Description

La présente invention concerne une cartouche amovible de traitement d'eau, du type comportant un corps contenant au moins un produit de traitement et comprenant une poignée qui est munie d'un dispositif dateur permettant d'indiquer la date choisie de changement de la cartouche.

L'invention s'applique notamment à une cartouche de traitement d'eau pour une machine à infusion telle que, par exemple, une cafetière ménagère goutte-à-goutte.

Dans une cafetière goutte-à-goutte, il est connu de placer dans le réservoir d'eau de la cafetière une cartouche adaptée à traiter l'eau versée dans le réservoir, ce traitement pouvant consister, par exemple, à purifier l'eau en utilisant, comme produit de traitement, des granules de charbon actif qui suppriment le goût et l'odeur du chlore.

Une telle cartouche de traitement d'eau est fabriquée pour être utilisée pendant une période donnée à l'issue de laquelle elle doit être changée du fait que le produit de traitement présente généralement une saturation après un temps déterminé d'utilisation et, de fait, devient inefficace dans sa fonction dévolue, par exemple, de purification de l'eau versée dans le réservoir d'une cafetière goutte -à-goutte.

D'après le document WO - A - 96 31440, on connaît une cartouche amovible de traitement d'eau équipée d'un dispositif dateur comprenant un marquage de symboles agencés suivant un cercle sur la face supérieure de la cartouche et représentant les différents mois de l'année, et un disque rotatif pourvu d'une aiguille formant repère destinée à venir en regard du symbole correspondant au mois de changement de la cartouche. Lors de la première utilisation de la cartouche, l'utilisateur tourne le disque pour amener l'aiguille en regard du mois de changement de la cartouche. Toutefois, il peut arriver que par inadvertance, l'utilisateur ne positionne pas l'aiguille sur le mois exact de changement de la cartouche, de sorte qu'il existe un risque pour l'utilisateur de changer à mauvais escient la cartouche, soit prématurément, soit tardivement.

L'invention a notamment pour but de remédier à ces inconvénients.

Selon l'invention, une cartouche amovible de traitement d'eau du type décrit précédemment, est plus particulièrement caractérisée en ce que la poignée présente une partie allongée portant une succession de symboles alignés représentant les différents mois de l'année, et le dispositif dateur comporte un curseur déplaçable sur la partie allongée de la poignée et possédant deux repères situés du côté des symboles et décalés latéralement l'un par rapport à l'autre d'une distance donnée correspondant à un nombre prédéfini de mois d'utilisation de la cartouche, l'un des repères étant positionné en regard du symbole correspondant au mois de la première utilisation de la cartouche et l'autre repère indiquant automatiquement le mois auquel la cartouche doit être changée.

Ainsi, par un simple déplacement du curseur marquant, par l'un des deux repères, le mois de première utilisation de la cartouche, ce curseur indique immédiatement par son autre repère le mois exact auquel l'utilisateur doit procéder au remplacement de la cartouche. De plus, ce curseur à deux repères constitue une pièce simple, économique, fiable et parfaitement adaptée à une fabrication en grande série.

Selon un mode d'exécution préféré, le curseur est constitué par un tronçon de bague dont les deux extrémités libres constituent respectivement les deux repères. Une telle réalisation particulière s'avère d'une très grande simplicité et d'un très faible coût en grande série.

L'invention vise également une machine à infusion, du type comportant un réservoir d'eau froide qui alimente un chauffe-eau et qui incorpore une cartouche amovible de traitement d'eau selon l'invention.

Les caractéristiques et avantages de l'invention ressortiront d'ailleurs de la description qui va suivre, à titre d'exemple non limitatif, en référence aux dessins annexés dans lesquels :
- la figure 1 est une vue partielle en coupe verticale d'une machine à infusion comportant une cartouche amovible de traitement d'eau selon l'invention ;
- la figure 2 est une vue partielle en élévation, à plus grande échelle, de la partie haute de la cartouche de la figure 1 ; et
- la figure 3 est une vue en perspective, à échelle agrandie, d'un curseur utilisé sur la cartouche de la figure 2.

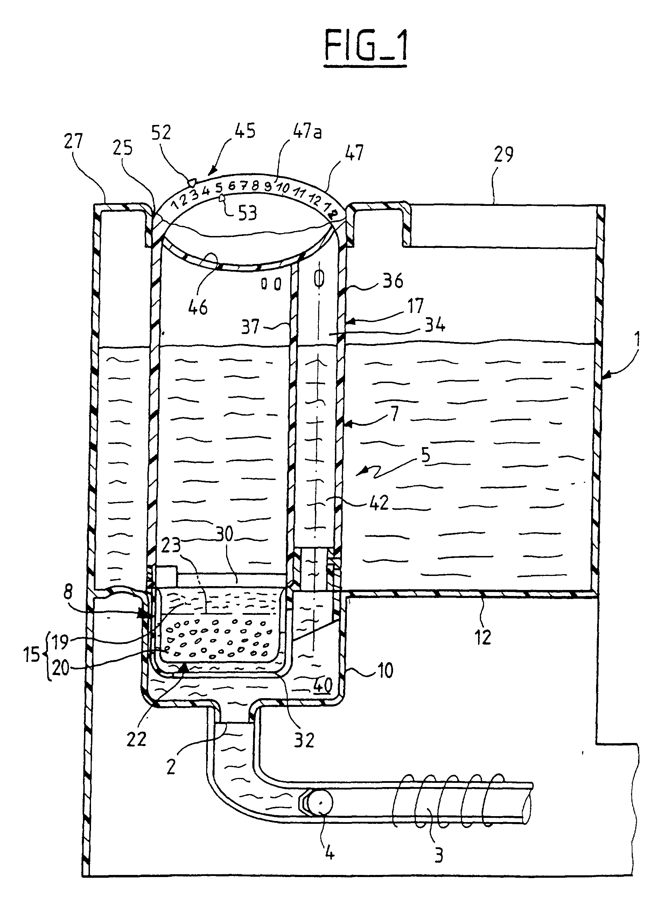

Sur la figure 1, on a représenté une partie d'une machine à infusion, telle qu'une cafetière goutte-à-goutte, comportant un réservoir d'eau froide 1, fermé par un couvercle non figuré, dont la sortie 2 est reliée à un chauffe-eau 3 via un clapet anti-retour 4 représenté schématiquement et qui incorpore une cartouche amovible de traitement d'eau, désignée par la référence générale 5, réalisée en une matière plastique telle que, par exemple, le polypropylène.

D'une manière connue en soi, la sortie du chauffe-eau alimente, par un tube d'eau chaude ascendant, une goulotte d'arrosage d'un filtre destiné à recevoir de la mouture de café et disposé au-dessus d'un collecteur de café.

Dans l'exemple de réalisation illustré à la figure 1, la cartouche amovible de traitement d'eau 5 comporte un corps 7 se composant d'une partie basse formant un godet 8 qui est monté étanche dans un bassin 10, de profil adapté, formé dans le fond 12 du réservoir 1, et qui contient un produit de traitement d'eau 15, et d'une partie haute formant un chapeau 17 destiné à fermer le godet 8.

Dans cet exemple, le produit de traitement d'eau 15 se compose d'une résine échangeuse d'ions 19 et de granules de charbon actif 20 traité par des sels d'argent. La résine 19 et les granules de charbon actif 20 sont contenus dans deux compartiments formés dans un même sachet-filtre 22 et séparés l'un de l'autre par une toile filtrante 23. Le sachet-filtre 22 est monté de façon amovible et étanche dans le godet 8 de la cartouche 5 et est réalisé en une matière perméable à l'eau, telle que par exemple un feutre. La résine échangeuse d'ions 19 a pour effet d'enlever de l'eau les éléments tels que le calcaire qui sont responsables de l'entartrage du chauffe-eau, tandis que les granules de charbon actif 20 ont pour effet de supprimer le goût et l'odeur du chlore, de retenir une partie des impuretés organiques et d'empêcher la prolifération des bactéries.

Comme le montre la figure 1, le corps 7 de la cartouche 5 présente une forme générale parallélépipédique allongée et s'étend verticalement dans le réservoir 1 en faisant légèrement saillie à travers une ouverture appropriée 25 pratiquée dans la partie supérieure 27 du réservoir.

On a représenté en 29 sur la figure 1 une ouverture de remplissage d'eau pratiquée dans la partie supérieure 27 du réservoir 1.

Dans l'exemple de réalisation représenté à la figure 1, le corps 7 de la cartouche comporte une échancrure 30 ménagée dans la zone de jonction entre le chapeau 17 et le godet 8 de la cartouche 5 et est destinée au passage de l'eau venant du réservoir 1 afin d'alimenter le sachet-filtre 22. Le godet 8 de la cartouche 5 s'étend sur une partie seulement de la profondeur du bassin 10 et présente une fente 32 communiquant directement avec un conduit vertical 34 délimité par une paroi latérale 36 du chapeau 17 et une paroi interne 37 de celui-ci, de sorte que l'espace 40 ménagé entre le fond du godet 8 de la cartouche 5 et le fond du bassin 10, ainsi que le conduit 34, délimitent un réservoir tampon, désigné en 42, qui est intégré en partie dans la cartouche 5.

Le godet 8 et le chapeau 17 de la cartouche 5 sont assemblés l'un à l'autre par des moyens d'encliquetage réversible. Pour une description détaillée de ces moyens d'encliquetage, ainsi que du fonctionnement de la machine d'infusion décrite précédemment, et du remplacement du sachet-filtre 22 à l'état saturé, on se reportera au document FR-A-2 708 452.

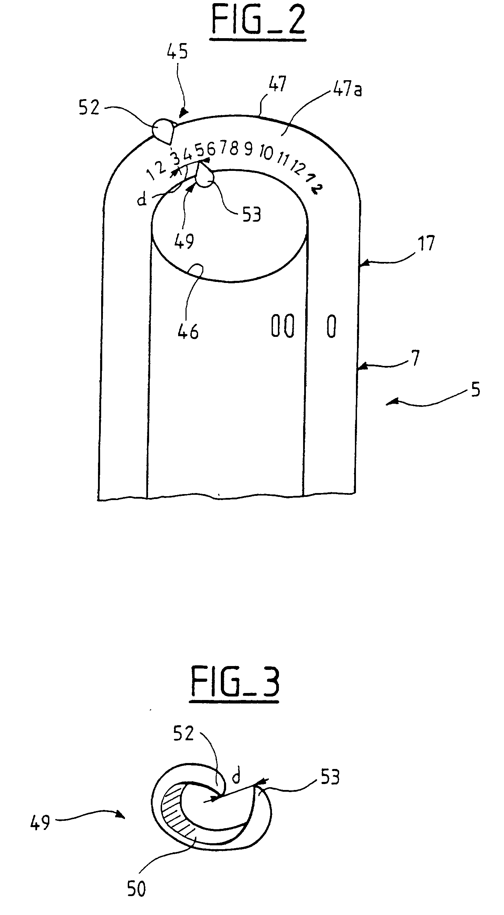

Conformément à l'invention, le corps 7 de la cartouche 5 comprend un dispositif dateur 45, mieux visible à la figure 2, permettant d'indiquer à l'utilisateur la date choisie, en particulier le mois, de changement du sachet-filtre 22 à l'état de saturation.

Dans l'exemple de réalisation illustré aux figures 1 et 2, le chapeau 17 de la cartouche 5 présente, à son extrémité supérieure, une partie évidée 46 qui délimite une poignée 47 présentant une partie allongée 47a de section droite sensiblement circulaire et munie du dispositif dateur 45.

Comme le montrent les figures 1 et 2, la partie allongée 47a de la poignée 47 porte sur une même face un marquage d'une succession de symboles alignés à intervalles réguliers et représentant, par exemple sous forme de chiffres, les différents mois de l'année.

Le dispositif dateur 45 comporte un curseur 49 constitué présentement par un tronçon de bague 50, comme montré à la figure 3, qui est monté coulissant et à frottement sur la partie allongée 47a de la poignée 47, voir figure 2.

Dans ce mode d'exécution, le tronçon de bague 50 est en forme de spire hélicoïdale et présente deux extrémités libres pointues 52, 53 constituant respectivement deux repères d'indexation qui sont situés du côté des symboles marqués sur la partie allongée 47a de la poignée 47 (figure 2), et qui sont décalés latéralement l'un par rapport à l'autre d'une distance donnée d correspondant à un nombre prédéfini de mois d'utilisation du sachet-filtre 22, en l'occurrence deux mois d'utilisation.

De préférence, le tronçon de bague 50 est réalisé par moulage d'une matière plastique rigide.

Ainsi, lors de la première utilisation du sachet-filtre 22 au sein du réservoir 1 de la cafetière, effectuée par exemple au mois de mars, l'utilisateur déplace par coulissement le tronçon de bague 50 en positionnant l'une (52) de ses extrémités en regard du chiffre"3" (mars), comme montré à la figure 2. Grâce au décalage angulaire prédéterminé existant entre les deux extrémités libres 52, 53 du tronçon de bague 50 et correspondant, dans cet exemple, à deux mois d'utilisation du sachet-filtre 22, l'autre extrémité 53 du tronçon de bague 50 vient dès lors automatiquement se positionner en regard du chiffre "5" (mai) pour lequel l'utilisateur doit changer le sachet-filtre 22 arrivé à saturation.

Ce dispositif dateur 45 est particulièrement avantageux dans la mesure où il est d'une conception simplifiée et économique, tout en étant judicieusement agencé sur la poignée de la cartouche pour rappeler à l'utilisateur, à chaque remplissage du réservoir, le mois de changement du sachet-filtre.

## Revendications

1. Cartouche amovible de traitement d'eau comportant un corps (7) contenant au moins un produit de traitement (19 ; 20) et comprenant une poignée (47) qui est munie d'un dispositif dateur (45) permettant d'indiquer la date choisie de changement de la cartouche, **caractérisée en ce que** la poignée (47) présente une partie allongée (47a) portant une succession de symboles alignés représentant les différents mois de l'année, et le dispositif dateur (45) comporte un curseur (49) déplaçable sur la partie allongée (47a) de la poignée (47) et possédant deux repères (52, 53) situés du côté des symboles et décalés latéralement l'un par rapport à l'autre d'une distance donnée (d) correspondant à un nombre prédéfini de mois d'utilisation de la cartouche, l'un (52) des repères étant positionné en regard du symbole correspondant au mois de la première utilisation de la cartouche et l'autre repère (53) indiquant automatiquement le mois auquel la cartouche doit être changée.

2. Cartouche selon la revendication 1, **caractérisée en ce que** le curseur (49) est monté à frottement sur la partie allongée (47a) de la poignée (47).

3. Cartouche selon la revendication 1 ou 2, **caractérisée en ce que** le curseur (49) est constitué par un tronçon de bague (50) dont les deux extrémités libres (52, 53) constituent respectivement les deux repères.

4. Cartouche selon la revendication 3, **caractérisée en ce que** la poignée (47) est de section droite sensiblement circulaire et le tronçon de bague (50) est de forme hélicoïdale.

5. Cartouche selon la revendication 3 ou 4, **caractérisée en ce que** le tronçon de bague (50) est réalisé par moulage d'une matière plastique rigide.

6. Cartouche selon l'une quelconque des revendications précédentes, **caractérisée en ce que** le produit de traitement (19 ; 20) est logé dans un sachet-filtre (22) qui est monté de manière amovible dans le corps (7).

7. Cartouche selon la revendication 6, **caractérisée en ce que** le corps (7) présente une forme générale parallélépipédique allongée et comporte à l'une de ses extrémités une partie évidée (46) qui délimite la poignée (47).

8. Machine à infusion comportant un réservoir d'eau froide (1) alimentant un chauffe-eau (3), **caractérisée en ce que** le réservoir (1) incorpore une cartouche amovible (5) de traitement d'eau telle que définie selon l'une quelconque des revendications précédentes.

## Patentansprüche

1. Auswechselbare Wasserbehandlungskartusche mit einem Körper (7), der mindestens ein Behandlungsprodukt (19; 20) enthält und einen Handgriff (47) aufweist, der mit einer Datumsanzeigevorrichtung (45) versehen ist, welche die Anzeige des gewählten Datums der Auswechslung der Kartusche ermöglicht, **dadurch gekennzeichnet, daß** der Handgriff (47) einen verlängerten Teil (47a) aufweist, der eine Folge von in einer Linie liegenden Symbolen trägt, welche die verschiedenen Monate des Jahres bedeuten, und die Datumsanzeigevorrichtung (45) einen Läufer (49) aufweist, der auf dem verlängerten Teil (47a) des Handgriffs (47) verschiebbar ist und zwei Markierungen (52, 53) aufweist, die auf der Seite der Symbole angeordnet sind und seitlich zueinander um einen gegebenen Abstand (d) versetzt sind, welcher einer vorbestimmten Anzahl von Monaten des Gebrauchs der Kartusche entspricht, wobei die eine (52) der Markierungen gegenüber dem Symbol angeordnet ist, das dem Monat der ersten Benutzung der Kartusche entspricht, und die andere Markierung (53) automatisch den Monat anzeigt, in dem die Kartusche ausgewechselt werden muß.

2. Kartusche nach Anspruch 1, **dadurch gekennzeichnet, daß** der Läufer (49) mit Reibung auf dem verlängerten Teil (47a) des Handgriffs (47) montiert ist.

3. Kartusche nach dem Anspruch 1 oder 2, **dadurch gekennzeichnet, daß** der Läufer (49) aus einem Ringabschnitt (50) besteht, dessen zwei freie Enden (52, 53) jeweils die zwei Markierungen bilden.

4. Kartusche nach Anspruch 3, **dadurch gekennzeichnet, daß** der Handgriff (47) einen graden, im wesentlichen kreisförmigen Querschnitt hat und der Ringabschnitt (50) Schraubenform hat.

5. Kartusche nach Anspruch 3 oder 4, **dadurch gekennzeichnet, daß** der Ringabschnitt (50) aus einem starren Kunststoffmaterial durch Formen hergestellt ist.

6. Kartusche nach einem der vorhergehenden Ansprüche, **dadurch gekennzeichnet, daß** das Wasserbehandlungsprodukt (19; 20) in einem Filterbeutel (22) untergebracht ist, der auswechselbar im Körper (7) montiert ist.

7. Kartusche nach Anspruch 6, **dadurch gekennzeichnet, daß** der Körper (7) eine im ganzen quaderförmige längliche Form aufweist und an einem seiner Enden einen ausgenommenen Teil (46) aufweist, welcher den Handgriff (47) begrenzt.

8. Brühmaschine mit einem Kaltwasserbehälter (1), der einen Wassererhitzer (3) speist, **dadurch gekennzeichnet, daß** der Behälter (1) eine auswechselbare Wasserbehandlungskartusche, wie in einem der vorangehenden Ansprüche definiert, aufnimmt.

## Claims

1. Removable water treatment cartridge comprising a body (7) containing at least one treatment product (19; 20) and comprising a handle (47) provided with a date indicator (45) for indicating the date selected for changing the cartridge, **characterised in that** the handle (47) has an elongated part (47a) bearing a series of aligned symbols representing the different months of the year, and the date indicator (45) comprises a slider (49) displaceable over the elongated part (47a) of the handle (47) and having two markers (52, 53) situated beside the symbols and offset laterally relative to one another by a given distance (d) corresponding to a predetermined number of months of use of the cartridge, one (52) of the markers being positioned opposite the symbol corresponding to the month of the first use of the cartridge and the other marker (53) automatically indicating the month at which the cartridge is to be changed.

2. Cartridge according to claim 1, **characterised in that** the slider (49) is friction mounted on the elongated part (47a) of the handle (47).

3. Cartridge according to claim 1 or claim 2, **characterised in that** the slider (49) is formed by a ring portion (50), the two free ends (52, 53) of which respectively form the two markers.

4. Cartridge according to claim 3, **characterised in that** the handle (47) has a substantially circular cross section and the ring portion (50) has a helical shape.

5. Cartridge according to claim 3 or claim 4, **characterised in that** the ring portion (50) is moulded from a rigid plastic.

6. Cartridge according to any one of the preceding claims, **characterised in that** the treatment product (19; 20) is housed in a filter sachet (22) removably mounted in the body (7).

7. Cartridge according to claim 6, **characterised in that** the body (7) has the general shape of an elongated parallelepiped and comprises at one of its ends a recessed part (46) which delimits the handle (47).

8. Beverage brewing machine comprising a cold water reservoir (1) supplying a water heater (3), **characterised in that** the reservoir (1) incorporates a removable water treatment cartridge (5) as defined according to any one of the preceding claims.
